# FASCICULE DE BREVET EUROPEEN

(11) **EP 0 436 419 B1**
(45) Date de publication et mention de la délivrance du brevet: **01.09.1993**
(21) Numéro de dépôt: 90403628.2
(22) Date de dépôt: 17.12.1990
(51) Int. Cl.: B29D 24/00, D04B 21/00

(54) **Ame textile, procédé de fabrication et produit composite obtenu avec une telle âme textile**
Textiler Kern, Verfahren zur Herstellung davon mit solchem textilen Kern erhaltene Kompositware
Textile core, method for its manufacture and layered product obtained from such textile core

(30) Priorité: 22.12.1989 FR 8917142
(43) Date de publication de la demande: 10.07.1991
(73) Titulaire: ISOFRAN, F-92800 Puteaux (FR)
(72) Inventeur: De Smet, Gabriel, F-60160 Nogent-sur-Oise (FR); Nicot, Jean-Philippe, F-60260 Morlay (FR); Sachs, Haroun, F-75003 Paris (FR)
(74) Mandataire: Lanceplaine, Jean-Claude

(56) Documents cités:
- EP-A- 0 321 735
- DE-A- 3 139 402
- DE-A- 3 408 769
- DE-A- 3 412 846
- FR-A- 2 559 422
- GB-A- 778 685
- US-A- 3 762 977
- US-A- 4 136 630

## Description

La présente invention a pour objet une âme textile formée d'au moins une nappe tricotée réalisée avec une ou plusieurs natures de fils, et imprégnée d'une résine et mise en forme, notamment pour la fabrication de produits composites à structure du type "sandwich".

La présente invention a également pour objet un procédé de fabrication et un produit composite obtenu avec une telle âme textile.

On connaît dans le brevet US-A-4 136 630 une une âme textile comprenant au moins une nappe non tissée comportant une ou plusieurs natures de fils, ladite nappe étant imprégnée d'une résine et mise en forme pour constituer des ondulations.

On connaît également dans le brevet DE-A-3 412 846 une structure "sandwich" plane comprenant deux peaux extérieures couvrantes et reliées entre elles par une âme de faible densité, constituée d'un matériau moins rigide que lesdites peaux couvrantes, comme par exemple un textile mis en forme à chaud après imprégnation d'une résine synthétique.

La mise en forme du textile permet de réaliser des saillies sensiblement cylindriques générant un second plan sur lequel s'appuie une des peaux de la structure sandwich.

Dans ce brevet, la structure sandwich ne constitue que des panneaux plans parallèles, rigides, ayant une âme alvéolaire dont les alvéoles, sont de forme identique, réparties uniformément sur toute la surface de ladite structure sandwich.

Or, dans certaines utilisations d'une telle structure sandwich, il est nécessaire d'avoir recours à des surfaces nervurées ou de forme non plane, pour améliorer par exemple les caractéristiques de résistance à la torsion ou flexion ou encore pour modifier localement la résistance à des efforts de pression.

La présente invention a donc pour but de proposer une âme textile pour la réalisation d'un produit composite dit structure du type "sandwich" de surface et de forme quelconques, comportant des zones de résistance mécanique particulière ou de caractéristiques spécifiques comme par exemple acoustique, vibratoire ou thermique.

Selon l'invention, l'âme textile constituée d'au moins une nappe tricotée comprenant une ou plusieurs natures de fils, ladite nappe étant imprégnée d'une résine et mise en forme, est caractérisée en ce que la nappe comporte, dans des zones prédéterminées, des alvéoles de hauteur et/ou de densité variable obtenues par tricotage.

De préférence, les alvéoles ont chacune la forme d'un tronc de cône,

La présente invention a également pour objet un procédé de fabrication d'une âme textile définie ci-dessus, caractérisé en ce que :
- on réalise une nappe textile par tricotage selon une armure déterminée et comprenant une ou plusieurs natures de fils,
- on modifie l'armature et les débits de tricotage de chaque fil, pour faire varier localement dans des zones prédéterminées, la densité et ou la composition des fils de la nappe,
- et on met en forme la nappe imprégnée de résine.

Selon une autre caractéristique, la nappe imprégnée est obtenue , soit lors du tricotage de fils préimprégnés, soit en imprégnant de résine la nappe après tricotage.

Selon encore une autre caractéristique, la mise en forme de la nappe est réalisée par polymérisation de la résine.

La présente invention a encore pour objet un produit composite formé d'au moins deux peaux reliées entre elles par une âme textile telle que définie ci-dessus, caractérisé en ce que les peaux ont des surfaces de forme développables ou non développables, la distance entre les peaux correspondant en tout point à la hauteur de l'âme textile formée d'au moins une nappe tricotée, imprégnée et mise en forme.

De préférence :
- les peaux sont des tôles,
- les peaux sont assemblées à l'âme textile par un moyen de liaison, par exemple par collage ou soudage,
- entre les deux peaux est inséré un matériau de remplissage,
- le matériau de remplissage est un matériau durcissable,
- l'âme textile comprend au moins deux nappes opposées et comportant des alvéoles de hauteur et/ou de densité variable,
- l'âme textile comprend au moins deux nappes superposées et comportant des alvéoles de hauteur et/ou de densité variable,
- l'âme textile comprend au moins deux nappes encastrées, les unes dans les autres, et comportant des alvéoles de hauteur et/ou de densité variable.

L'invention sera mieux comprise à l'aide de la description qui va suivre, donnée uniquement à titre d'exemple et faite en se référant aux dessins annexés sur lesquels :
- la Fig. 1 est une vue en perspective partiellement écorchée d'un produit composite selon l'invention,
- la Fig. 2 est une vue en plan d'une partie d'une nappe tricotée formant l'âme textile selon l'invention, avant sa mise en forme,
- la Fig. 3 est une vue en plan d'une partie d'une nappe tricotée montrant sa déformation en extension après mise en forme,
- la Fig. 4 est une vue en plan d'une nappe tricotée sur laquelle, pour une partie, l'armure et le débit des fils du tricot ont été modifiés localement,
- la Fig. 5 est une vue en plan d'une partie d'une nappe tricotée sur laquelle un troisième fil a été introduit dans un tricot de mailles déterminées,
- la Fig. 6 est une vue en coupe longitudinale d'un produit composite selon un premier mode de réalisation de l'invention;
- la Fig. 7 est une vue en coupe longitudinale d'un produit composite selon un deuxième mode de réalisation de l'invention,
- la Fig. 8 est une vue en coupe longitudinale d'un produit composite selon un troisième mode de réalisation de l'invention.

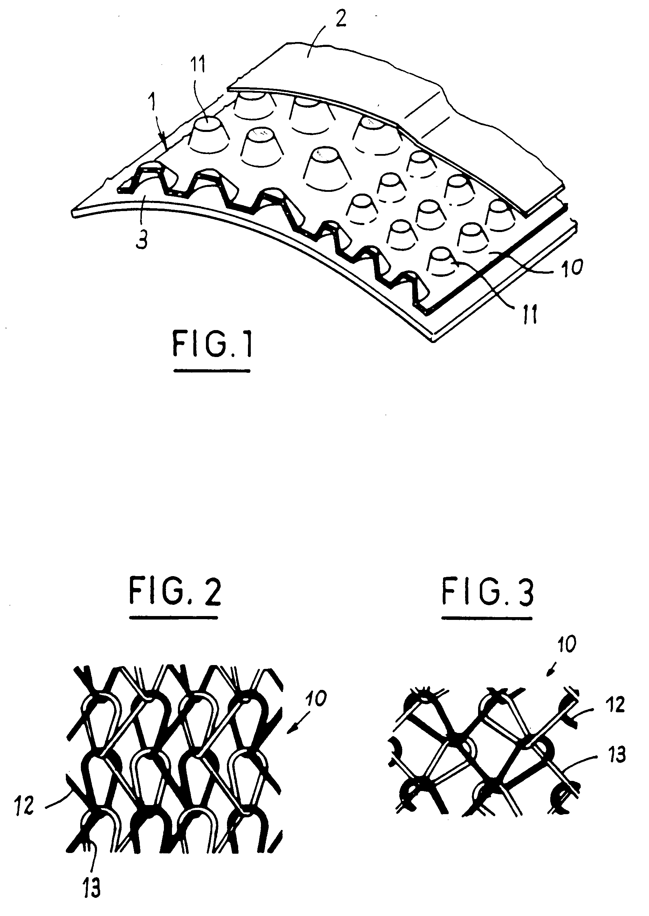

En se reportant à la Fig. 1, on a représenté un produit composite dit structure "sandwich" comportant deux peaux 2 et 3 entre lesquelles est insérée une âme textile désignée dans son ensemble par la référence 1. Cette âme textile est formée d'une nappe 10 tricotée ou non tissée et mise en forme, ladite nappe étant imprégnée de résine.

Par ailleurs, on réalise sur la nappe textile 10 des saillies 11 générant des alvéoles, par exemple en forme de tronc de cône.

Ces saillies peuvent être également longitudinales et générer des ondulations.

Les saillies 11 sont de forme, et/ou de densité, et/ou d'amplitude variable et sont obtenues par l'effet d'une poussée par exemple perpendiculaire au plan de la nappe 10.

A la Fig. 2, on a représenté une partie d'une nappe 10 réalisée en tricot, à partir de deux fils 12 et 13, le fil 12 étant par exemple un élasthane de polyuréthane et le fil 13 un polyester texturé.

La nappe 10 peut être tricotée avec différentes mailles afin d'adapter l'âme 1 aux conditions d'utilisation du produit composite.

Comme représenté sur la Fig. 3, sous l'effet d'une poussée, les mailles se déforment et s'allongent, entraînant un appauvrissement de la densité de mailles et de fils. La déformation provoque une modification locale des caractéristiques de la nappe 10.

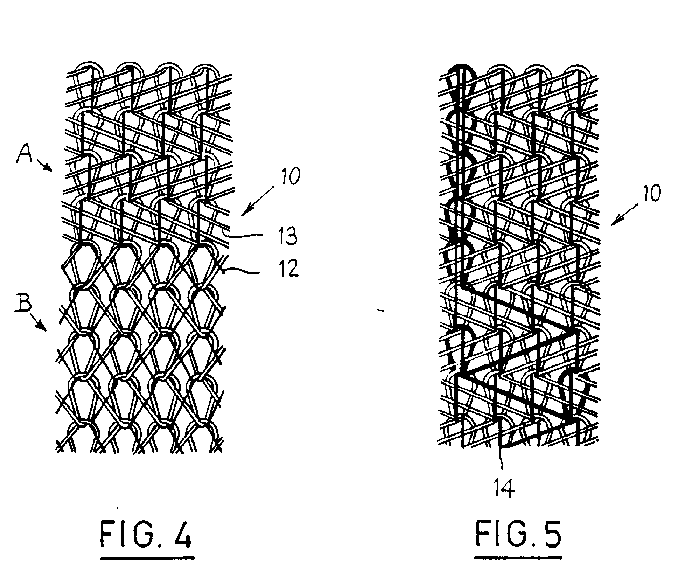

Comme représenté sur la Fig. 4, la nappe 10 comporte une partie A dont on a modifié l'armure et le débit des fils de tricot et une partie B non modifiée, la partie A étant plus dense que la partie B.

Pour réaliser ce type de nappe, on tricote avec une armure de base, puis, à l'emplacement où l'on souhaite faire varier la densité des fils de la nappe, on modifie l'armure, et parallèlement le débit de chaque fil. Cette opération s'effectue notamment sur un métier Chaîne avec un dispositif électronique programmable de modification d'armure et de débit.

Une autre possibilité, représentée sur la Fig. 5, consiste sur une armure de base, par exemple composée d'au moins deux fils, à introduire un troisième fil 14, par exemple identique au fil 12 formé par un élastane de polyuréthane. Ce fil 14 est lié dans le tricot sur une aiguille, mais à l'emplacement où l'on souhaite densifier la nappe on modifie la jetée de ce troisième fil en le portant sur trois aiguilles par exemple. Ceci a pour conséquence de créer une surépaisseur variable selon le débit du fil, localement à l'emplacement souhaité.

Lorsque le troisième fil 14 est disposé en bandes intermittentes sur la largeur du tricot, on obtient sur la nappe à l'emplacement des jetées sur trois aiguilles des surépaisseurs ayant la forme de carré ou de rectangle. Les alvéoles formées ultérieurement sont donc renforcées à l'emplacement de ces surépaisseurs.

Dans le cas où l'on utilise une nappe composée de deux matières différentes, par exemple un fil à haute tenacité et un élastomère, la proportion de ces deux composants peut être modifiée localement ce qui provoque une nouvelle modification des caractéristiques locales de la nappe textile.

La nappe 10 est tricotée par exemple avec au moins un fil préalablement imprégné d'une résine synthétique par exemple une résine phénolique polymérisable. Il est également possible, en fonction de la densité des mailles du tricot, de modifier la densité locale de résine. La nappe 10 peut aussi être imprégnée de résine après tricotage ce qui entraîne une autre répartition de la densité de la résine dans ladite nappe.

L'utilisation d'un fil textile préalablement imprégé permet d'ajuster la quantité de résine en fonction de la densité locale des mailles du tricot constituant la nappe 10.

La nappe 10 peut également être réalisée par entrelacement de fibres d'une ou de plusieurs natures.

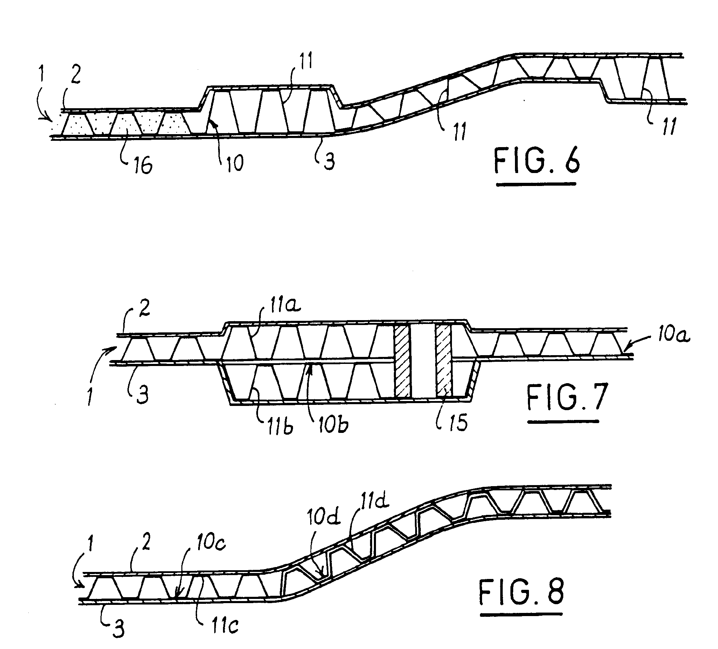

La Fig. 6, représente un premier mode de réalisation d'un produit composite comprenant les deux peaux 2 et 3 reliées entre elles par l'âme 1 formée de la nappe textile 10.

Cette nappe textile 10 comporte dans des zones prédéterminées des saillies 11 de hauteur et/ou de densité variable et les deux peaux 2 et 3 formées, par exemple par des tôles métalliques minces, sont de surface développable ou non développable.

Les peaux 2 et 3 préalablement formées par exemple par emboutissage selon un profil défini, sont alors associées à l'âme 1 par collage, soudage ou tout autre procédé de liaison.

Selon un autre mode de réalisation représenté à la Fig.7, l'âme 1 peut être formée, dans des zones prédéterminées, de deux nappes textiles 10a et 10b par exemple opposées comportant chacune des saillies 11a et 11b de hauteur et/ou de densité variable.

Lors de l'assemblage du produit composite, des éléments mécaniques, comme par exemple une bague 15 de fixation, peuvent être insérés entre les peaux 2 et 3 et l'âme 1 peut être découpée localement à cet effet.

Selon encore un autre mode de réalisation représenté à la Fig. 8, l'âme 1 peut être formée, dans des zones prédéterminée, de deux nappes textiles 10c et 10d encastrées comportant chacune des saillies 11c et 11d de hauteur et/ou de densité variable.

La superposition ou l'encastrement de deux nappes permet d'augmenter localement l'épaisseur de l'âme 1 pour un renforcement mécanique. L'espace libre entre les deux peaux 2 et 3 peut être comblé par un matériau de remplissage 16 durcissable ou non (Fig. 6), comme par exemple du polyuréthane ou une résine assurant au produit localement ou en toutes zones des propriétés déterminées ou choisies telles que mécanique, thermique ou phonique. Le matériau durcissable occupe tout ou partie du volume compris entre les deux peaux 2 et 3.

Le produit composite de structure sandwich ainsi réalisé présente, outre une forme complexe, des propriétés locales déterminées telles que mécaniques, acoustique ou phonique alliées à des propriétés propres à la structure de type "sandwich" telle que rigidité et légèreté.

La variation de densité des mailles du tricot permet d'obtenir une nappe textile ayant dans des zones locales particulières des propriétés locales mécaniques ou physiques définies et les différentes mailles du tricot utilisées pour la réalisation de la nappe permettent des déformations d'amplitude variable.

## Revendications

1. Ame textile comprenant au moins une nappe (10) tricotée comportant une ou plusieurs natures de fils (12, 13, 14), ladite nappe (10) étant imprégnée d'une résine et mise en forme, caractérisée en ce que la nappe (10) comporte, dans des zones prédéterminées, des alvéoles (11) de hauteur et/ou de densité variable obtenues par tricotage.

2. Ame textile selon la revendication 1, caracatérisée en ce que les alvéoles ont chacune la forme d'un tronc de cône.

3. Procédé de fabrication d'une âme textile selon l'une des revendications précédentes, caractérisé en ce que :
- on réalise une nappe textile (10) par tricotage selon une armure déterminée et comprenant une ou plusieurs natures de fils (12, 13, 14),
- on modifie l'armure et les débits de tricotage de chaque fil (12, 13, 14) pour faire varier localement dans des zones prédéterminées la densité ou la composition des fils (12, 13, 14) de la nappe (10),
- et on met en forme la nappe (10) imprégnée de résine.

4. Procédé selon la revendication 3, caractérisé en ce que l'imprégnation de résine dans la nappe (10) est réalisée préalablement au tricotage en utilisant au moins un fil préimprégné.

5. Procédé selon la revendication 3, caractérisé en ce que l'imprégnation de résine dans la nappe (10) est réalisée après tricotage.

6. Procédé selon l'une des revendications 3, à 5, caractérisé en ce que la mise en forme de la nappe (10) est réalisée par polymérisation de la résine.

7. Produit composite formé d'au moins deux peaux (2, 3) reliées entre elles par un âme textile (1) comprenant au moins une nappe (10) tricotée comportant une ou plusieurs natures de fils (12, 13, 14), ladite nappe (10) étant imprégnée d'une résine et mise en forme, la nappe (10) comporte, dans des zones prédéterminées, des alvéoles avantageusement tronc-coniques (11) de hauteur et/ou de densité variable. caractérisé en ce que les peaux (2, 3) ont des surfaces de forme développables, ou non développables, la distance entre les peaux (2, 3) correspond en tout point à la hauteur de l'âme textile (1) formée d'au moins une nappe (10) tricotée, imprégnée et mise en forme.

8. Produit composite selon la revendication 7, caractérisé en ce les peaux (2, 3) sont des tôles.

9. Produit composite selon la revendication 7, caractérisé en ce que les peaux (2, 3) sont assemblées à l'âme textile (1) par un moyen de liaison par exemple par collage ou soudage.

10. Produit composite selon l'une des revendications 7 à 9, caractérisé en ce qu'il comporte entre les peaux (2, 3) un matériau de remplissage (16).

11. Produit composite selon la revendication 10, caractérisé en ce que le matériau de remplissage (16) est un matériau durcissable.

12. Produit composite selon l'une des revendications 7 à 11, caractérisé en ce que l'âme textile (1) comprend au moins deux nappes (10a, 10b) opposées et comportant des alvéoles (11) de hauteur et/ou de densité variable.

13. Produit composite selon l'une des revendications 7 à 11, caractérisé en ce que l'âme textile (1) comprend au moins deux nappes (10a, 10b) superposées et comportant des alvéoles (11) de hauteur et/ou de densité variable.

14. Produit composite selon l'une des revendications 7 à 11, caractérisé en ce que l'âme textile (1) comprend au moins deux nappes (10c, 10d) encastrées les unes dans les autres et comportant des alvéoles (11) de hauteur et/ou de densité variable.

## Patentansprüche

1. Textiler Kern, mit wenigstens einer gestrickten Schicht (10), welche eine oder mehrere Arten von Fäden (12, 13, 14) umfaßt, wobei die Schicht (10) mit einem Harz imprägniert und ihr eine Form gegeben ist, dadurch gekennzeichnet, daß die Schicht (10) in vorbestimmten Bereichen Zellen (11) variabler Höhe und/oder Dichte umfaßt, die durch Stricken erhalten sind.

2. Textiler Kern nach Anspruch 1, dadurch gekennzeichnet, daß die Zellen jede die Form eines Kegelstumpfes haben.

3. Verfahren zum Herstellen eines textilen Kernes nach einem der vorangehenden Ansprüche, dadurch gekennzeichnet, daß:
- man eine textile Schicht (10) durch Stricken nach einer vorgegebenen Bindungsart und mit einer oder mehreren Arten von Fäden (12, 13, 14) herstellt,
- man die Bindungsart und die Strickdichte jedes Fadens (12, 13, 14) modifiziert, um lokal in vorsbestimmten Bereichen die Dichte oder die Zusammensetzung der Fäden (12, 13, 14) der Schicht (10) zu ändern,
- und man der mit Harz imprägnierten Schicht (10) eine Form gibt.

4. Verfahren nach Anspruch 3, dadurch gekennzeichnet, daß die Harzimprägnierung in der Schicht (10) vor dem Stricken durchgeführt wird, indem wenigstens ein vorimprägnierter Faden verwendet wird.

5. Verfahren nach Ansruch 3, dadurch gekennzeichnet, daß die Harzimprägnierung in der Schicht (10) nach dem Stricken durchgeführt wird.

6. Verfahren nach einem der Ansprüche 3 bis 5, dadurch gekennzeichnet, daß die Formgebung der Schicht (10) durch Polymerisieren des Harzes bewirkt wird.

7. Kompositprodukt, gebildet aus wenigstens zwei Häuten (2, 3), die untereinander durch einen textilen Kern (1) mit wenigstens einer gestrickten Schicht (10), welche eine oder mehrere Arten von Fäden (12, 13, 14) umfaßt, wobei die Schicht (10) mit einem Harz imprägniert und ihr eine Form gegeben ist, wobei die Schicht (10) in vorbestimmten Bereichen Zellen, vorteilhafterweise Kegelstümpfe, (11) variabler Höhe und/oder Dichte umfaßt, die durch Stricken erhalten sind, verbunden sind, dadurch gekennzeichnet, daß die Häute (2, 3) Flächen einer abwälzbaren oder nicht abwälzbaren Form haben, wobei der Abstand zwischen den Häuten (2, 3) in jedem Punkt der Höhe des textilen Kerns (1) entspricht, der aus wenigstens einer gestrickten Schicht (10) gebildet, imprägniert und dem eine Form gegeben ist.

8. Kompositprodukt nach Anspruch 7, dadurch gekennzeichnet, daß die Häute (2, 3) Bleche sind.

9. Kompositprodukt nach Anspruch 7, dadurch gekennzeichnet, daß die Häute (2, 3) an den textilen Kern (1) durch ein Verbindungsmittel, beispielsweise durch Kleben oder Schweißen, angesetzt sind.

10. Kompositprodukt nach einem der Ansprüche 7 bis 9, dadurch gekennzeichnet, daß es zwischen den Häuten (2, 3) ein Füllmaterial (16) umfaßt.

11. Kompositprodukt nach Anspruch 10, dadurch gekennzeichnet, daß das Füllmaterial (16) ein härtbares Material ist.

12. Kompositprodukt nach einem der Ansprüche 7 bis 11, dadurch gekennzeichnet, daß der textile Kern (1) wenigstens zwei gegenüberliegende und Zellen (11) variabler Höhe und/oder Dichte umfassende Schichten (10a, 10b) aufweist.

13. Kompositprodukt nach einem der Ansprüche 7 bis 11, dadurch gekennzeichnet, daß der textile Kern (1) wenigstens zwei Übereinandergelegte und Zellen (11) variabler Höhe und/oder Dichte umfassende Schichten (10a, 10b) aufweist.

14. Kompositprodukt nach einem der Ansprüche 7 bis 11, dadurch gekennzeichnet, daß der textile Kern (1) wenigstens zwei ineinandergesetzte und Zellen (11) variabler Höhe und/oder Dichte umfassende Schichten (10c, 10d) aufweist.

## Claims

1. Textile core including at least one knitted sheet (10) comprising one or more kinds of yarn (12, 13, 14), the said sheet (10) being impregnated with a resin and shaped, characterised in that the sheet (10) comprises, in predetermined regions, cells (11) of variable height and/or density, which are obtained by knitting.

2. Textile core according to Claim 1, characterised in that each of the cells has the shape of a conical frustum.

3. Process for the manufacture of a textile core according to either of the preceding claims, characterised in that:
- a textile sheet (10) is produced by knitting according to a determined weave and including one or more kinds of yarn (12, 13, 14),
- the weave and the knitting rates of each yarn (12, 13, 14) are modified to vary locally, in predetermined regions, the density or the composition of the yarns (12, 13, 14) of the sheet (10),
- and the resin-impregnated sheet (10) is shaped.

4. Process according to Claim 3, characterised in that the impregnation of resin in the sheet (10) is carried out before the knitting by employing at least one preimpregnated yarn.

5. Process according to Claim 3, characterised in that the impregnation of resin in the sheet (10) is carried out after knitting.

6. Process according to one of Claims 3 to 5, characterised in that the shaping of the sheet (10) is carried out by polymerisation of the resin.

7. Composite product made up of at least two skins (2, 3) joined together by a textile core (1) including at least one knitted sheet (10) comprising one or more kinds of yarn (12, 13, 14), the said sheet (10) being impregnated with a resin and shaped, the sheet (10) comprises, in predetermined regions, advantageously frustoconical cells (11) of variable height and/or density, characterised in that the skins (2, 3) have surfaces of expandable or nonexpandable shape, the distance between the skins (2, 3) corresponds at any point to the height of the textile core (1) made up of at least one knitted sheet (10), impregnated and shaped.

8. Composite product according to Claim 7, characterised in that the skins (2, 3) are metal sheets.

9. Composite product according to Claim 7, characterised in that the skins (2, 3) are assembled with the textile core (1) by a connecting means, for example by adhesive bonding or welding.

10. Composite product according to one of Claims 7 to 9, characterised in that it comprises a filling material (16) between the skins (2, 3).

11. Composite product according to Claim 10, characterised in that the filling material (16) is a curable material.

12. Composite product according to one of Claims 7 to 11, characterised in that the textile core (1) includes at least two opposed sheets (10a, 10b) comprising cells (11) of variable height and/or density.

13. Composite product according to one of Claims 7 to 11, characterised in that the textile core (1) includes at least two superposed sheets (10a, 10b) comprising cells (11) of variable height and/or density.

14. Composite product according to one of Claims 7 to 11, characterised in that the textile core (1) includes at least two sheets (10c, 10d) embedded in one another and comprising cells (11) of variable height and/or density.
